# EUROPEAN PATENT SPECIFICATION

(11) **EP 3 929 571 B1**
(45) Date of publication and mention of the grant of the patent: **01.05.2024**
(21) Application number: 20182348.1
(22) Date of filing: 25.06.2020
(51) Int. Cl.: G01N 21/90

(54) **APPARATUS FOR QUALITY CONTROL OF DECORATED CONTAINERS**
VORRICHTUNG ZUR QUALITÄTSKONTROLLE DEKORIERTER BEHÄLTER
APPAREIL POUR LE CONTRÔLE DE LA QUALITÉ DE RÉCIPIENTS DÉCORÉS

(43) Date of publication of application: 29.12.2021
(73) Proprietor: DeCoSystem S.r.l., 50041 Calenzano (IT)
(72) Inventor: LASTRUCCI, Tiziano, 50141 FIRENZE (IT); PAITA, Marco, 01100 OYONNAX (FR)
(74) Representative: Lavoix

(56) References cited:
- EP-A2- 0 872 724
- JP-A- H04 350 015
- JP-A- 2011 011 914
- US-A- 3 901 381
- US-A- 4 915 237
- US-B2- 8 670 032

## Description

The present invention relates in general to an apparatus for controlling the quality of decorated containers comprising at least one substantially circular cylindrical portion, typically bottles, tubes, jars, sticks, cans and the like, and to a production line including such apparatus.

In particular, the present invention is especially adapted to control the surface, the print quality or the label application of such type of containers.

Production lines and methods for producing, decorating, labelling or filling containers like bottles, tubes, jars, sticks, cans, et cetera, are spread and well known in many technical fields, such as for example in cosmetics, pharma, food and beverage, just to mention a few ones.

In particular, inside the production line, these containers are circulated, among the various production stages and up to a final palletization or packaging station, in one or more rows by means of line conveyors.

Usually, suitable apparatuses and various methods are used to control the quality of the containers, and in particular of the external surface and the print of their bodies.

Such controls are aimed for example at identifying the occurrence of any defect present on the external surface of the containers, like scratches, dents, bubbles, intrusions, or of any defect of the application of a label on the surface of the container, or of any defect of the decoration process; such decorations can comprise for example inscriptions, logos, images, et cetera, which can be printed on the outer surface of the body of the containers, for example by means of screen printing machines, or digital printing heads, or via any other suitable technique.

One solution currently adopted for controlling the surface quality of containers foresees the use of a certain number of fixed cameras mutually located at well-defined angles, for example four cameras positioned at ninety degrees, or alternatively six cameras positioned at sixty degrees.

Accordingly, when for example bottles transit on a line conveyor in the area where the cameras are installed, each camera acquires images of a portion of the bottle when it passes in front of the relevant camera; such solution does not allow to perform a very accurate control due to the distortions generated by the acquisition of the images on a curved surface.

Alternative known solutions foresee to control the quality of the surface by realizing in the production line "ad hoc" stations dedicated to perform the quality control and using rather complex machines.

According to this solution, samples of the containers to be controlled are usually extracted from the main line conveyor, separated from each other and allocated on the control station where they are stopped in front of a camera and then rotated in order to allow the camera to acquire images of each container under control; after performing the quality control, a controlled sample is repositioned back on the main line conveyor.

These solutions require rather complex and expensive machines and also negatively impact the production rates because they imply some dead or additional production times, such as those necessary to extract the containers to be inspected, then to stop and rotate each of them in front of or around the inspecting camera, and finally to reposition the controlled containers back on the main line conveyor.

US 8,670,032 B2 discloses an inspection device for bottles or similar containers, comprising a transport section for the containers and a camera system for creating images of at least one region of the containers moved past the camera system.

US 4,915,237 A discloses a container inspection system wherein, in an axial inspection area, containers are carried through rim, energy absorption and base inspection areas by means of side rollers bridging a gap in endless belt conveyor sections. In a side wall inspection area, containers are continuously rolled before a video detector operable to record and analyze images including at least three of the rolling bottles. A downstream mechanical diverter device includes a picker element operable to stop a container ahead of a container to be diverted, and means for positioning the diverted container to be squeezed into a diversion path between the stopped container and a next container, the next container advancing continuously through the diversion process.

JP H04 350015 discloses a body rotation transport device, wherein first and second belt devices are provided along both sides of a conveyor advance direction, and are arranged to press-contact from both sides the side portions of a body transported by means of the conveyor.

EP 0872724 A2 discloses a method and a system for the external inspection of containers. The method involves the acquisition of the image of the bottles, performed from a single recording zone, while said bottles move forwards rotating about themselves through a predetermined angle. The system comprises means for rotating the bottles, through a predetermined angle, during their travel in a predetermined zone, means for recording the image of the lateral surface of said bottles in said predetermined zone, and a PLC logic which processes said image so as to reconstruct the image of the lateral surface of each bottle.

Hence, it is evident from the above that there is still room and desire for improvements in the way the control of the quality of containers of the type previously mentioned is nowadays realized.

Therefore, it is a main aim of the present invention to fulfill at least partially such room and desire, and in particular to provide a solution for accurately controlling the quality of containers which allows to mitigate, at least partially, one or more of the above indicated drawbacks of known solutions.

Within the scope of this aim, an object of the present invention is to provide a solution for controlling the quality of containers without substantially impacting the productions rates of such containers, or at most having a very minimal impact.

An additional object of the present invention is to provide a solution for properly controlling the quality of containers whose application is flexible, highly reliable, easy to realize and at competitive costs.

This aim, these objects and others which will become apparent hereinafter are achieved by an apparatus for controlling the quality of a plurality of decorated containers according to the appended set of claims.

Finally, the present invention also encompasses a production line, for example for producing or filling decorated containers, as defined in claim 7.

In particular, in the production line according to the invention, the conveyor belt illustrated is a saturation conveyor configured to translate a plurality of containers, especially bottles, aligned side by side along a single transfer line and touching each with the adjacent one.

Further characteristics and advantages will become apparent from the description of some preferred but not exclusive exemplary embodiments of a apparatus, a method and a production line according to the present disclosure, illustrated only by way of non-limitative examples with the accompanying drawings, wherein:
figure 1 is a perspective view schematically showing a first exemplary embodiment of an apparatus according to the invention used in a production line where bottles are transported on a conveyer;
figure 2 is a front view of the apparatus illustrated in figure 1;
figure 3 is a top view of the apparatus illustrated in figure 1;
figure 4 is a top view of a second exemplary embodiment of an apparatus according to the invention used in a line for producing bottles;
figure 5 is a flow chart schematically illustrating a method for controlling the quality of containers not in accordance with the appended claims.

It should be noted that in the detailed description that follows, identical or similar components, either from a structural and/or functional point of view, may have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", or a similar term is used herein while referring to any component as a whole, or to any part of a component, or to a combination of components, it has to be understood that it means and encompasses correspondingly either the structure, and/or the configuration and/or the form and/or the positioning.

In addition, when the term "substantial" or "substantially" is used herein, it has to be understood as encompassing an actual variation of plus or minus 5% with respect to an indicated reference value or position, and when the terms transversal or transversally are hereby used, they have to be understood as encompassing a direction non-parallel to the reference part(s) or direction(s)/axis they refer to, and perpendicularity has to be considered a specific case of transverse direction.

Finally, in the following description and claims, the numeral cardinals first, second, third et cetera..., will be used only for the sake of clarity of description and in no way they should be understood as limiting for whatsoever reason; in particular, the indication of a component referred to for instance as the "fourth ..." does not imply necessarily the presence or strict need of the preceding "first" or "second" or "third" ones, unless such presence is clearly evident for the correct functioning of the relevant embodiment(s) described, nor that the order should be the one exactly in the numerical sequence described with reference to the illustrated exemplary embodiment(s).

The apparatus according to the present invention is especially suitable for being applied to control the quality of the surface of decorated containers, having at least one substantially circular cylindrical portion, such as in particular bottles, be the surface to be controlled either the external surface of the body of such bottles or a decoration printed or in whatever manner applied on the external surface of the body; accordingly, they will be described hereinafter and are illustrated in the attached drawings above listed, by making reference to such particular and preferred application, without intending however to limit their possible use and applications.

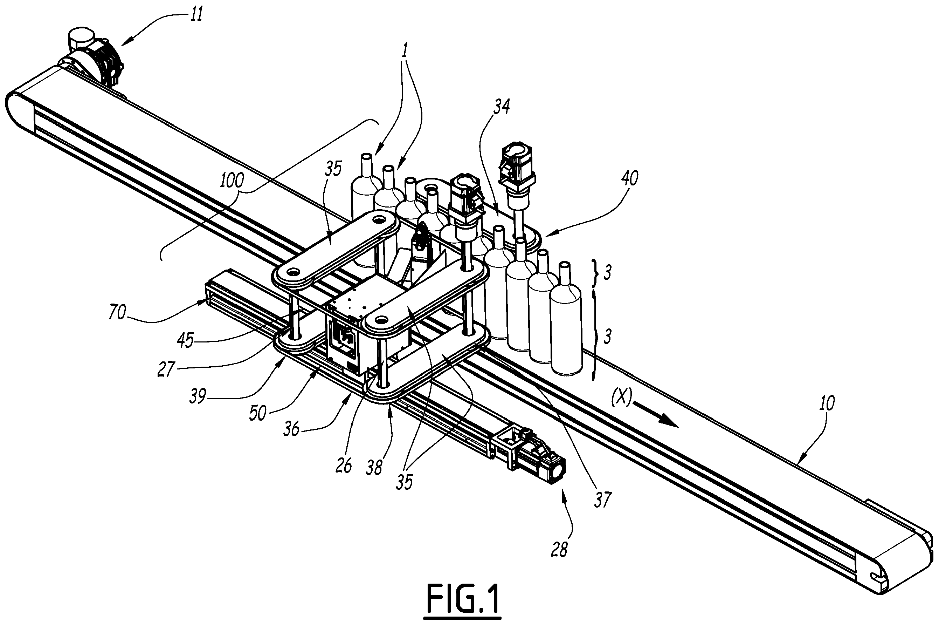

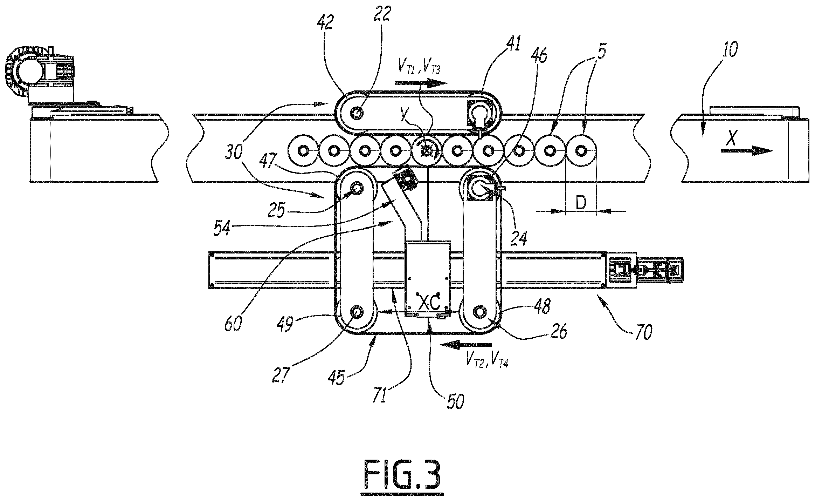

Figure 1 illustrates a first exemplary embodiment of the quality control apparatus according to the invention, indicated by the overall reference number 100, for controlling the quality of decorated containers 1 whose body includes at least one tubular portion 3 having a substantially circular cross-section, indicated in figure 3 by the reference number 5 with respect to a reference axis Y; in practice, the axis Y passes from the center of the circular cross section 5 and is substantially perpendicular to the virtual plane on which the circular cross section lies on.

In the embodiments illustrated, the containers 1 are represented by bottles 1 e.g. glass bottles, whose bodies extend along a reference axis Y, which is substantially vertical and represents the axis of symmetry of the whole body of the bottles 1 represented.

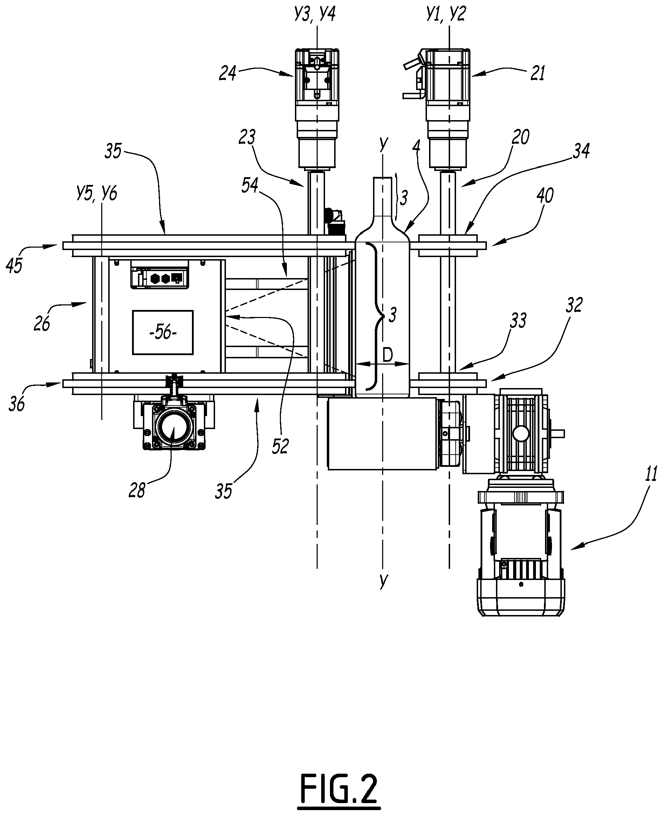

In particular, the body of each of the exemplary bottles 1 illustrated includes two main substantially cylindrical portions 3, namely the bottom part and the neck which are joined to each other by a tapered shoulder, indicated in figure 2 by the reference number 4; in this example, as better visible in figures 3, 4 and 5, both cylindrical portions 3 have a substantially circular cross section 5 with respect to the reference axis Y.

Clearly, the bottles 1 can have shapes different from the one illustrated.

As illustrated in figures 1-5, the bottles 1 are positioned on a conveyor belt 10 which is part of a production line according to solutions commonly used in the art, and therefore not described herein in details.

The conveyor belt 10 is adapted to translate a plurality of bottles 1 along a transfer direction X, e.g. substantially rectilinear, which is transversal, and in particular perpendicular, with respect to the reference axis Y.

In the examples illustrated, the conveyor belt 10 is for instance actuated by a motor 11, and is in particular a so-called saturation conveyor, namely a conveyor belt adapted to transfer a plurality of bottles aligned in a single line and touching each with the adjacent one(s).

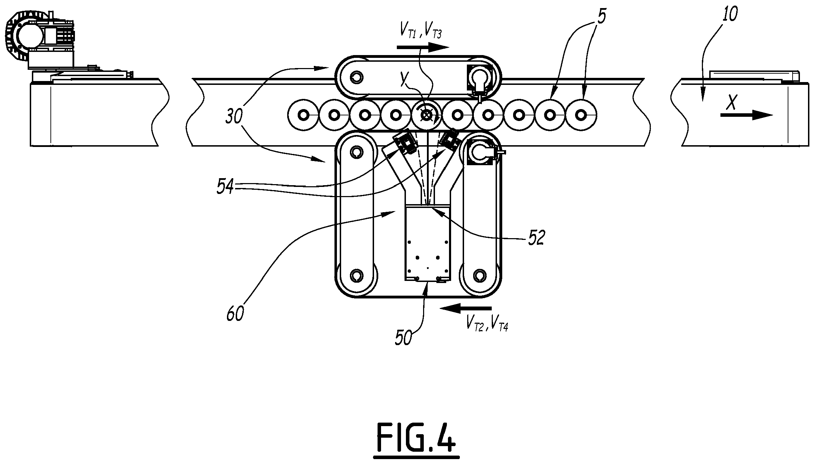

The apparatus 100 according to the invention comprises at least a manipulating apparatus, indicated in figures 3 and 4 by the cumulative reference number 30, which is configured to get in contact with the external surface of at least a first bottle 1a of the plurality of bottles 1 transported by the conveyor belt 10, and to cause the first bottle1a to rotate, in particular for a predetermined interval of time, around the reference axis Y while at the same time the first bottle 1a rests directly on the surface of the conveyor belt 10 and continues to be translated by the conveyor 10 itself along the transfer direction X.

In practice, the first bottle 1a constitutes a sample bottle targeted for verifying the quality of a batch of bottles under production, and the apparatus 100 can be properly designed and programmed to control one sample bottle every any desired number of bottles, and/or for every selectable interval of time.

To this end, the apparatus 100 further comprises an inspection system, indicated in figures 1, 3 and 4 by the overall reference number 50, which is configured to capture one or more images of at least a portion of the first bottle 1a while the first bottle 1a is roto-translating on the conveyor 10, namely it is rotating around the reference axis Y thanks to the action of the manipulating apparatus 30 and is translating along the transfer direction X due to the continuous movement of the conveyor belt 10.

In particular, the inspection system 50 is further configured to elaborate the one or more images captured and to control the quality of the first bottle 1a or of a portion thereof by comparing the one or more images elaborated with at least one reference image representing a quality-acceptable model for the bottle 1a or for a portion thereof.

According to a possible embodiment, the manipulating apparatus 30 is configured to cause the first bottle 1a to rotate for at least, preferably more than, one full turn around the reference axis Y while the first bottle 1a is translated by the conveyor belt 10 along the transfer direction X of a rectilinear predetermined distance.

In particular, the manipulating apparatus 30 is configured to cause the first bottle 1a to rotate at least 360°, preferably between 420° degrees and 520° degrees, while the first bottle 1a is translated by the conveyor belt 10 along the transfer direction X of a rectilinear predetermined distance.

In particular, if the bottles 1 are aligned and touching each with the adjacent one(s), the predefined distance is substantially equal to the diameter D of the substantially circular cross section 5 of the bottles; if instead the bottles 1 are spaced apart from each other, then the predetermined distance is the sum of the diameter D of the substantially circular cross section 5 of the bottles 1 plus the distance between a bottle and a following one measured along the transfer direction X.

In practice, the first bottle 1a rotates around its vertical axis Y for the defined angular range while it is translated by the conveyor belt 10 of the predetermined distance; if a container, like the bottles 1, has two or more portions having a circular cross-section with different diameters, then the longest diameter of the circular cross sections can be taken as a reference and constitutes exactly the predetermined distance of translation along the conveyor belt 10; or such longest diameter constitutes the reference distance to which adding the further distance from one container to the following one to form such predetermined distance.

For instance, for the bottle 1a illustrated in the figures, the translation distance is selected equal to the diameter of the circle of the cylindrical bottom part 3.

Clearly, and depending on the applications, it is possible to select as reference any other suitable diameter of a container 1 under control.

In the apparatus 100 according to the invention, the manipulating apparatus 30 comprises at least one contact device which is installed, along the conveyor 10, rotating around a first axis of rotation Y1 substantially parallel to the reference axis Y and in a position suitable to get in contact, for a predetermined interval of time, with an external surface of at least the first bottle 1a, while the first bottle 1a is translated by the conveyor 10 along the moving direction X.

Conveniently, the at least one contact device is installed in a position adjustable relative to the conveyor 10.

In particular, the position of the at least one contact device can be adjusted relative to the conveyor belt, preferably at least along the first axis of rotation Y1, i.e. its vertical position can be modified relative to the bearing surface of the conveyor belt 10.

According to possible embodiments, the position of the at least one contact device can be conveniently adjusted also along the reference direction X and/or also in a direction transversal to both the reference direction X and the reference axis Y, namely along the direction virtually linking the two long sides of the conveyor belt 10.

According to the possible embodiments illustrated in the figures 1 and 4, the at least one contact device comprises at least one couple of drive belts, and in particular a first drive belt 32 and a second drive belt 36 which are installed along the conveyor belt 10, substantially parallel and facing to each other with the plurality of bottles 1 passing in between when translated by the conveyor 10.

In particular, the first drive belt 32 is properly arranged, i.e. positioned and moved, to tangentially contact a first external surface of the first bottle 1a, e.g. close to the base of the bottom part of the bottle 1a, with a first tangential speed V_{T1}, and the second drive belt 36 is properly arranged, i.e. positioned and moved, to tangentially contact a second external surface of the first bottle 1a, substantially opposite to the first external surface contacted by the first drive belt 32, with a second tangential speed V_{T2}.

Conveniently, the first and second tangential speeds V_{T1} and V_{T2} are directed along the transfer direction X both in the direction of advancement of the conveyor 10, or one in the direction of advancement and the other in the opposite direction as illustrated in figures 3-4; further, they have values differing from each other; in particular, the difference between the values of the two speeds V_{T1} and V_{T2} is substantially equal to the double of the rotation speed V_{R} of the first bottle 1a at the contact surfaces, and the sum between the values of the two speeds V_{T1} and V_{T2} is substantially equal to the double of the speed Vc of the conveyor belt 10.

In the embodiments illustrated in the attached figures 1-4, the first drive belt 32 is mounted around a first pulley 33 and a second pulley, which is hidden in the figures and is substantially identical to the first pulley 33; the first pulley 33 and the second pulley are mounted rotating around respective first and second rotation axes Y1, Y2 substantially parallel to each other and to the reference axis Y, with the first drive belt 32 adapted to tangentially contact a first external surface of the first bottle 1a as previously indicated.

The first pulley 33 is mounted along and solidly movable with a first rotating shaft 20 actuated by a first motor 21, and the second pulley is mounted rotating around a first supporting shaft 22, with the first drive belt 32 wrapped around them and, while rotating, dragging into rotation the second pulley.

In turn, the second drive belt 36 can be mounted also around at least another couple of pulleys, in a manner similar to that of the first drive belt 32.

In particular, in the exemplary embodiments illustrated, the second drive belt 36 is mounted around four pulleys, namely a third pulley 37, a fourth pulley which is hidden in the figures and is substantially identical to the third pulley 37, a fifth pulley 38, and a sixth pulley 39, which are mounted each rotating around a respective third, fourth, fifth and sixth rotation axis Y3, Y4, Y5 and Y6 substantially parallel to each other and to the reference axis Y (and hence to the rotation axes Y1 and Y2 as well), with the second drive belt 36 which is adapted to tangentially contact the second external surface of the first bottle 1a as previously indicated.

The third pulley 37 is mounted along and solidly movable with a second rotating shaft 23 actuated by a second motor 24, the fourth pulley can be mounted rotating around a second supporting shaft 25, the fifth pulley 38 can be mounted rotating around a third supporting shaft 26, and the sixth pulley 39 can be mounted rotating around a fourth supporting shaft 27, with the second drive belt 36 wrapped around them and, while rotating, dragging into rotation the fourth pulley and the fifth and sixth pulleys 38, 39.

According to a possible embodiment, and as illustrated in figures 1-4, the at least one contact device of the manipulating apparatus 30 comprises a second couple of drive belts, and in particular a third drive belt 40 and a fourth drive belt 45 which are installed along the conveyor 10, substantially parallel and facing to each other with the plurality of bottles 1 passing in between when translated by the conveyor 10.

The third drive belt 40 and the fourth drive belt 45 are positioned at a height, relative to the conveyor 10, higher than that of the respective first and second drive belts 32 and 36; in particular, the third drive belt 40 is arranged, above and spaced apart from the first drive belt 32, and the fourth drive belt 45 is arranged, above and spaced apart from the third drive belt 36.

The third drive belt 40 is properly arranged, i.e. positioned and moved, to tangentially contact a third external surface of the first bottle 1a, e.g. an upper surface of the bottom part of the bottle 1a, with a third tangential speed V_{T3}.

In turn, the fourth drive belt 45 is properly positioned, i.e. positioned and moved, to tangentially contact a fourth external surface of the first bottle 1a, substantially opposite to the third external surface contacted by the third drive belt 40, with a fourth tangential speed V_{T4}.

The third and fourth tangential speeds V_{T3} and V_{T4} can be directed along the transfer direction X both in the direction of advancement of the conveyor 10, or one in the direction of advancement and the other in the opposite direction (as for example illustrated in figures 3 and 4), and they have values differing from each other; in particular, the difference between the values of the two speeds V_{T3} and V_{T4} is substantially equal to the double of the rotation speed V_{R} of the first bottle 1a at the contact surfaces of the belts 40 and 45, and the sum between the values of the two speeds V_{T3} and V_{T4} is substantially equal to the double of the speed Vc of the conveyor belt 10.

Clearly, if the diameters where the first and second belts 32 and 36 and respectively the third and fourth belts 40 and 45 bottle touch the first bottle 1a are the same, like in the example illustrated, then the first and third speeds V_{T1} and V_{T3} can be equal to each other, and the second and fourth speeds V_{T2} and V_{T4} can be equal to each other as well.

Hence, the movements of the four drive belts 32, 36, 40 and 45 are properly synchronized so that the resulting translation speed is substantially equal to the speed Vc of the conveyor belt 10 and the rotation speed V_{R} is suitable for the acquisition of the image realized by a camera 52, as it will be described hereinafter.

In the embodiments illustrated, the third drive belt 40 is for example mounted in a manner similar to that of the first drive belt 32, and the fourth drive belt 45 is mounted in a manner similar to that of the second drive belt 36; nevertheless the third drive belt 40 and the fourth drive belt 45 con be mounted with two dedicated motors.

The third drive belt 40 is mounted around a seventh pulley 41 and an eighth pulley 42; the seventh pulley 41 is mounted, substantially aligned with the first pulley 33, along and solidly rotating, with the first rotating shaft 20 actuated by the first motor 21, around the first rotation axis Y1, while the eighth pulley 42 is mounted, substantially aligned with the second pulley along the first supporting shaft 22, and rotating around the second rotation axis Y2, with the third drive belt 32 adapted to tangentially contact the third external surface of the first bottle 1a as previously indicated.

In the embodiments illustrated, two cross-members 34 structurally interconnect the first rotating shaft 20 and the first supporting shaft 22, thus contributing to form a unique first subassembly of the manipulating apparatus 30, which can be moved and positioned as a stand-alone device.

In turn, the fourth drive belt 45 can be mounted also around at least another couple of pulleys, in a manner similar to that of the third drive belt 40.

In particular, in the exemplary embodiments illustrated, the fourth drive belt 45 is mounted around four pulleys, namely: a ninth pulley 46 which is mounted, aligned with the third pulley 37, along and solidly rotating with the second rotating shaft 23 actuated by the second motor 24, around the third rotation axis Y3; a tenth pulley 47 which is mounted along the second supporting shaft 25, aligned with the fourth pulley, and rotating around the fourth rotation axis Y4; an eleventh pulley 48 which is mounted along the third supporting shaft 26, aligned with the fifth pulley 38, rotating around the fifth rotation axis Y5; a twelfth pulley 49 which is mounted along the fourth supporting shaft 27, aligned with the sixth pulley 39, rotating around the sixth rotation axis Y6; with the fourth drive belt 36 wrapped around them and, while rotating, dragging into rotation the pulleys 47, 48 and 49.

In the embodiments illustrated, there are provided four cross-members 35 out of which two structurally interconnect the second rotating shaft 23 and the third supporting shaft 26, and the other two interconnect the second and fourth supporting shafts 25 and 27; in this way, a unique second subassembly of the manipulating apparatus 30 is formed which can be moved and positioned also as a stand-alone device.

Conveniently, the position of each of the drive belts (and of the associated pulleys around which each drive belt is wrapped) can be adjusted relative to the conveyor 10, for example along the respective shafts, i.e. along the respective axes of rotation; in this way, it possible to adapt easily the manipulating apparatus 30 to different containers and/or superficial areas to be controlled.

Further, with respect to the exemplary embodiments illustrated, each of the drive belt can be positioned separately from the others, for example the first drive belt 32 can be mounted separately from the third drive belt 36, and the same can be realized as regard to the second and fourth drive belts 40 and 45, and/or each of the drive belts can be arranged on a mounting support allowing to adjust the position along the direction transversal to the reference axis Y and the transfer direction X.

According to an alternative embodiment, not illustrated by figures and not in accordance with the appended claims, the at least one contact device comprises one or more wheels which are installed, along the conveyor 10, each rotating around a respective axis of rotation substantially parallel to the reference axis Y and in a position suitable to get in contact with a corresponding external surface of the first bottle 1a while the first bottle is translated by the conveyor 10 along the moving direction X.

For example, there may provided couples of wheels facing to each other at a certain mutual distance with the bottles 1 passing in between, similar to what described for the first and second drive belts 32 and 36, and/or the third and fourth drive belts 40 and 45; the wheels can be for example mounted along respective vertical supports, in a manner similar to that of the pulleys previously described.

In the apparatus 100 according to the present invention, the inspection system 50 comprises:
- at least one video camera schematically indicated in the attached figures 2 and 4 by the reference number 52 which is arranged to capture one or more images of the first bottle 1a or f any portion thereof;
- at least one illuminator, schematically indicated in the attached figures 2- by the reference number 54, which is configured to selectively illuminate at least a portion of the first bottle 1a during the time the first bottle 1a is roto-translating on the conveyor 10, as previously described;
- an electronic processing and control unit 56 which is configured to elaborate the one or more images captured by the at least one video camera 52 and to control the quality of the first bottle 1a or of a portion thereof by comparing the one or more elaborated images with the at least one reference image indicative of a quality-acceptable model of the bottle 1a or of portion thereof.

The illuminator 54 can comprise any suitable light source and is mounted on an associated arm, which can be fixed or movable to properly orient the emitted light.

The camera 52 can be any suitable camera, for example a linear digital camera or a matrix digital camera. A linear digital camera can acquire a full image of the development of the bottle 1a composing a set of acquired single lines. Considering that the bottle 1a is translating, also the camera 52 must translate mirroring the translation movement of the bottle 1a. A matrix digital camera, installed in a fixed position, can acquire a full image of the development of the bottle 1a composing a set of acquired blocks, for example blocks of lines, acquired via an acquiring sensor. Considering that the bottle 1a is translating the camera 52 must follow the movement of the bottle 1a activating a different portion of the acquiring sensor.

The electronic processing and control unit 56 comprises for example a computing system including one or more processors, or processor-based devices or controllers, which can be of any suitable and commercially available type, and can be suitably programmed with software and to the extent needed accompanied with suitable circuitry, for performing the functionalities it is used for, and notably for processing graphical images.

In one possible embodiment, the illuminator 54 is installed within a space surrounded by at least one of the drive belts.

According to yet a possible embodiment, the video camera 52 is installed within a space surrounded by at least one of the drive belts.

In particular, according to the exemplary embodiments illustrated in the figures 1-4, the illuminator 54 and the video camera 52 are installed within the space 60 surrounded by the second drive belt 36 and the fourth drive belt 45.

For instance, in the embodiments illustrated in figures 1-3 the illuminator 54 and the video camera 52 are mounted on a supporting structure 70 positioned on a side of the conveyor belt 10.

According to these embodiments, also the subassembly formed by the second drive belt 36, the fourth drive belt 45, with their associated drive pulleys, the rotating shaft 23, the supporting shafts 25, 26 and 27 and the four cross-members are mounted on or positioned over such supporting structure 70.

According to the embodiment illustrated in figures 1-3, the at least one video camera 52, and the illuminator 54 are arranged movable, at least for a portion of the length of the conveyor 10, back and forth along a movement axis XC substantially parallel to the transfer direction X; in this case, the illuminator 54 and the video camera 52 are for example mounted on a rail or chassis 71 of the supporting structure 70 and are actuated for example by a motor 28 to slide along the rail 71 within the space 60 delimited by the sides of the drive belts 36 and 45 transversal with respect to the transfer direction X.

Alternatively, this translation movement can be also obtained by a linear numerical controlled system, or by a numerically controlled mechanical continuous movement.

In practice, according to the embodiment illustrated in figures 1-3, while the bottles 1 are translated by the conveyor belt 10 along the transfer direction X, in the manipulating zone of the conveyor belt 10 where the drive belts get in contact with the first bottle 1a and cause its rotation as previously described, also the illuminator 54 and the camera 52 moves in the same direction with the illuminator 54 illuminating the rotating first bottle 1a and the camera 52 capturing the image(s) of the first bottle 1a or of any desired portion thereof. Once the camera 52 has completed the capture of the image(s), which occurs while the first bottles 1a has rotated for at least 360°, or preferably even more, then the camera 52 and the illuminator 54 are translated along the rail 71, by the motor 28, in the opposite direction with respect to the direction of movement of the conveyor belt 10, thus returning to the initial position and get ready to capture images of a next bottle 1 to be controlled.

One or more decoders can be suitably used to coordinate the functioning of the various parts of the manipulating apparatus 30 in particular with the camera 52, and /or with the conveyor belt 10, according to solutions readily available to those skilled in the art and therefore not described herein in details.

According to an exemplary embodiment illustrated in figure 4, the video camera 52 is installed in a fixed position along the conveyor 10, for example on the support structure like the structure 70, and inside the space 60.

In this case, there are provided for example two illuminators 54 which are installed within the space 60, e.g. in a fixed position.

Conveniently, according to this embodiment, the camera 52 is a high speed digital video camera 52 which comprises an electronic detecting system or sensor having a plurality of detecting parts which can be selectively activated by its own control unit to select in sequence different regions of interest (ROI) of the sensor in order to acquire one or more images of the first container (1a) or of a portion thereof while the first container (1a) is roto-translating on the conveyor belt (10).

In practice, according to this embodiment, while the first bottle 1a is rotating, different parts of the detecting system of the camera 52 are selectively activated and capture each one or more images of the respective relevant region of interest on the external surface of the first bottle 1a.

In each of the previous embodiments, the one or more images captured by the camera 52, are elaborated by the electronic control and processing unit 56; for example, if a matrix camera or a linear camera is used, the camera 52 builds a reconstructed image thanks to the composition of lines or blocks of lines acquired during the rotation of the first bottle 1a around its axis Y.

Then, the reconstructed image is compared with at least one reference image indicative of a quality-acceptable model of the bottle 1a or of portion thereof.

In this way, it is therefore possible for example to identify any unacceptable imperfection, for example the presence of the scratch on the surface of the first bottle 1a, or any imperfection on a decoration applied on a portion thereof.

Clearly, the apparatus 100 can be used also for controlling other types of defects, e.g. of the shape of any suitable container 1.

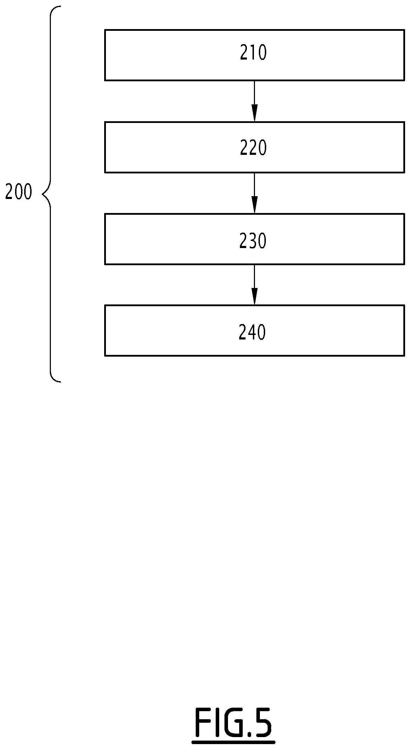

Figure 5 schematically illustrates a method 200 not encompassed by the appended claims, for controlling the quality of decorated containers 1, of the type previously indicated and which are suitable to be translated by the conveyor belt 10 along the transfer direction.

As illustrated, the method 200, which can be used in connection with and carried out using the apparatus 100 previously described, comprises at least the following steps:
- 210: contacting, by means of a manipulating apparatus, like the apparatus 30 previously described, at least a first container 1a of said plurality of containers 1 and causing the first container 1a to rotate around said reference axis Y while resting directly on and continuing to be translated by the conveyor 10 along the transfer direction X; then, by means of an inspection system, such as the inspection system 50 previously described,
- 220: capturing one or more images of at least a portion of the first container 1a while the first container 1a is roto-translating on the conveyor 10;
- 230: elaborating the one or more images captured
- 240: controlling the quality of the first container 1a or of a portion thereof by comparing the one or more elaborated images with at least one reference image representing a quality-acceptable model of the container 1a or of portion thereof.

According to an embodiment of the method 200, the step of contacting 210 comprises causing the first container 1a to rotate around the reference axis Y for at least 360°, i.e. one full turn, or preferably even more than one full turn, e.g. between 420° degrees and 520° degrees, while the first container 1a is translated by the conveyor 10 along the transfer direction X of a rectilinear predetermined distance as previously indicated.

The method 200 can likewise execute in terms of steps all functionalities performed by the apparatus 100 as a whole, or of any part thereof, which are not replicated herein in terms of steps or sub-steps for the sake of avoiding unnecessary repetitions.

Hence, it is evident from the foregoing description that the apparatus 100 according to the present invention allow achieving the intended aim and objects since the control of the quality, and in particular of the surface quality, is performed in an accurate and reliable way and without interrupting the regular flow of containers on the conveyor, thus not affecting the production rates.

These results are achieved according to a solution which is quite easy to realize at very competitive costs and extremely flexible; indeed, as previously described the relevant components of the apparatus 100 namely the manipulating apparatus 30 and the inspection system 50 are in practice realized as stand-alone units which can be easily installed at any desired position of any suitable conveyor. For example, in a production site they can just be removed from one conveyor and applied to another conveyor belonging to a different production line, and/or they can be used with the same conveyor and easily adapted to containers of different types and dimensions, for instance by properly adjusting the height of one or more of the drive belts in connection with the shape and size of the containers or portions thereof.

Further, it is possible to modify the mutual distance between each couple of facing drive belts, and if more than one couple of drive belts is used, the mutual distance between the drive belts of one couple can be different from that between the drive belts of another couple.

Therefore, it is possible to apply the system 100 according to the invention for controlling the quality of many different types of containers having a body which comprises at least a tubular portion with a circular cross section, namely a kind of substantially circular cylinder, such as various types of bottles, tubes, jars, sticks, cans, as well as in principle any type of containers. And in whatever suitable production line using a conveyor belt 10 as previously described.

Hence, the present invention encompasses also a production line comprising a conveyor belt, and an apparatus 100 as previously described and as better defined in the relevant appended claims.

The apparatus 100 thus conceived is susceptible of modifications and variations, all of which are within the scope of the inventive concept as defined in particular by the appended claims; for example, in relation to the specific application, some of the components, e.g. of parts of the controls can be positioned remotely, such as the control and processing unit 56, or there could be more than one control unit for sharing in coordination the various tasks and functionalities beforehand described; the couples of associated drive belts 32 and 36 and 40 and 45 can be located along the conveyor belt 10 in two separate manipulating areas and associated each with a camera and an illuminator, et cetera.

All the details may furthermore be replaced with technically equivalent elements.

## Claims

1. An apparatus (100) for controlling the quality of a plurality of decorated containers (1) which are suitable to be translated by a conveyor belt (10) along a transfer direction (X) and comprise at least one tubular portion (3) having a cross-section substantially circular with respect to a reference axis (Y) transversal to the transfer direction (X), the apparatus (100) comprising at least:
- a manipulating apparatus (30) configured to get in contact with the external surface of at least a first container (1a) of said plurality of decorated containers (1) and cause the first container (1a) to rotate for a predetermined interval of time around the reference axis (Y) while the first container (1a) rests directly on and continues to be translated by the conveyor belt (10) along the transfer direction (X), wherein the manipulating apparatus (30) comprises at least one contact device (32) which is installed, along the conveyor belt (10), rotating around an axis of rotation (Y1) substantially parallel to said reference axis (Y) and in a position suitable to get in contact with the external surface of said at least the first container (1a) while the first container (1a) is translated by the conveyor belt (10) along the transfer direction (X), the at least one contact device (32) comprising at least a first drive belt (32) and a second drive belt (36) which are installed along the conveyor belt (10) substantially parallel and facing to each other with the plurality of containers (1) passing in between, wherein the first drive belt (32) is arranged to contact a first external surface of the first container (1a) with a first tangential speed (V_{T1}) and the second drive belt (36) is arranged to contact, substantially at the same time, a second external surface of the first container (1a) opposite to the first external surface, with a second tangential speed (V_{T2}), and wherein said first and second tangential speeds (V_{T1}, V_{T2}) are directed along the transfer direction (X) both in the direction of advancement of the conveyor belt (10) or one in said direction of advancement and the other in the opposite direction and have values differing from each other;
- an inspection system (50) configured to capture one or more images of at least a portion of the first container (1a) while the first container (1a) is roto-translating on the conveyor (10), wherein the inspection system (50) is further configured to elaborate the one or more images captured and to control the quality of the first container (1a) or of a portion thereof by comparing the one or more images elaborated with at least one reference image representing a quality-acceptable model for the first container (1a) or for a portion thereof;
the apparatus (100) being **characterized in that** the at least one contact device of the manipulating apparatus (30) further comprises:
- a third drive belt (40) and a fourth drive belt (45) which are installed along the conveyor belt (10) substantially parallel and facing to each other with the plurality of containers (1) passing in between, wherein the third drive belt (40) is arranged to contact a third external surface of the first container (1a) with a third tangential speed (V_{T3}) and the fourth drive belt (45) is arranged to contact a fourth external surface of the first container (1a), substantially opposite to the third surface, with a fourth tangential speed (V_{T4}), and wherein said third and fourth tangential speeds (V_{T3}, V_{T4}) are directed along the transfer direction (X) both in the direction of advancement of the conveyor belt (10) or one in said direction of advancement and the other in the opposite direction and have values differing from each other; and **in that** each of said first, second, third and fourth drive belts (32, 36, 40, 45) is installed in a position adjustable relative to the conveyor belt (10), wherein
- the first drive belt (32) is mounted around a first pulley (33) and a second pulley, the first pulley (32) being mounted along and solidly movable with a first rotating shaft (20) actuated by a first motor (21) and the second pulley mounted rotating around a first supporting shaft (22), the first pulley (33) and the second pulley rotating around respective first and second rotation axes (Y1, Y2) substantially parallel to each other and to the reference axis (Y) with the first drive belt (32) wrapped around them and, while rotating, dragging into rotation the second pulley;
- the second drive belt (36) is mounted around a third pulley (37), a fourth pulley, a fifth pulley (38), and a sixth pulley (39), the third pulley (37) being mounted along and solidly movable with a second rotating shaft (23) actuated by a second motor (24), the fourth pulley being mounted rotating around a second supporting shaft (25), the fifth pulley (38) being mounted rotating around a third supporting shaft (26), and the sixth pulley (39) being mounted rotating around a fourth supporting shaft (27), the third, fourth, fifth and sixth pulleys rotating each around a respective third, fourth, fifth and sixth rotation axis (Y3, Y4, Y5 Y6) substantially parallel to each other and to the reference axis (Y), with the second drive belt (36) wrapped around them and, while rotating, dragging into rotation the fourth pulley and the fifth and sixth pulleys (38, 39);
- the third drive belt (40) is mounted around a seventh pulley (41) and an eighth pulley (42), the seventh pulley (41) being mounted, substantially aligned with the first pulley (33), along and solidly rotating with the first rotating shaft (20) actuated by said first motor (21), around the first rotation axis (Y1), the eighth pulley (42) being mounted, substantially aligned with the second pulley, along the first supporting shaft (22) and rotating around the second rotation axis (Y2);
- the fourth drive belt (45) is mounted around a ninth pulley (46), a tenth pulley 47, an eleventh pulley (48) and a twelfth pulley (49), the ninth pulley (46) being mounted, aligned with the third pulley (36), along and solidly rotating with the second rotating shaft (23) actuated by said second motor (24), around the third rotation axis (Y3), the tenth pulley (47) being mounted along the second supporting shaft (25), aligned with the fourth pulley, and rotating around the fourth rotation axis (Y4), the eleventh pulley (48) being mounted along the third supporting shaft (26), aligned with the fifth pulley (38), rotating around the fifth rotation axis (Y5), the twelfth pulley (49) being mounted along the fourth supporting shaft (27), aligned with the sixth pulley (39), rotating around the sixth rotation axis (Y6), with the fourth drive belt (36) wrapped around them and, while rotating, dragging into rotation the tenth, eleventh and twelfth pulleys (47, 48, 49); and wherein the manipulating apparatus (30) further comprises:
- two cross-members (34) which structurally interconnect the first rotating shaft (20) and the first supporting shaft (22) thereby forming a first subassembly of the manipulating apparatus (30) movable and placeable as a first stand-alone device, and
- further four cross-members (35) out of which two cross-members (35) structurally interconnect the second rotating shaft (23) and the third supporting shaft (26), and the other two cross-members (35) interconnect the second and fourth supporting shafts (25, 27), thereby forming a second subassembly of the manipulating apparatus (30) movable and placeable as a second stand-alone device.

2. The apparatus (100) according to claim 1, wherein the manipulating apparatus (30) is configured to cause the first container (1a) to rotate for at least one full turn around the reference axis (Y) while the first container (1a) is translated by the conveyor belt (10) along the transfer direction (X) of a predetermined distance substantially equal to the diameter (D) of its substantially circular cross section or substantially equal to the sum of the diameter (D) of its substantially circular cross section plus the distance of the first container (1a) from the following container (1) measured along the direction (X).

3. The apparatus (100) according to one or more of the previous claims, wherein said inspection system (50) further comprises at least one illuminator (54) configured to illuminate at least a portion of the first container (1a) while the first container (1a) is roto-translating on the conveyor belt (10), said at least one illuminator (54) being installed within a space (60) surrounded by said first drive belt (32) or by said second drive belt (36).

4. The apparatus (100) according to one or more of the previous claims, wherein said inspection system (50) further comprises at least one video camera (52), equipped with a linear sensor, which is arranged movable, at least for a portion of the length of the conveyor belt (10), back and forth along a movement axis (XC) substantially parallel to said transfer direction (X).

5. The apparatus (100) according to one or more of the claims 1 to 4, wherein the inspection system (50) further comprises at least one high speed video camera (52), equipped with a matrix sensor, which is installed in a fixed position along the conveyor belt (10) and is configured to select in sequence different region of interests of the sensor in order to acquire one or more images of the first container (1a) or of a portion thereof while the first container (1a) is roto-translating on the conveyor belt (10).

6. The apparatus (100) according to claim 5 or 6, wherein the inspection system (50) further comprises an electronic processing unit (56) which is configured to elaborate the one or more images captured by the at least one video camera (52) and to control the quality of the first container (1a) or of a portion thereof by comparing the one or more elaborated images with the at least one reference image.

7. A production line for producing or filling decorated containers (1) which comprise at least one tubular portion (3) having a cross-section substantially circular with respect to a reference axis (Y), the production line being **characterized in that** it comprises at least:
- a conveyor belt (10) which is adapted to translate a plurality of said decorated containers (1) under production along a transfer direction (X) transversal with respect to the reference axis (Y); and
- an apparatus (100) for controlling the quality of said plurality of decorated containers (1) according to one or more of the preceding claims.

## Patentansprüche

1. Ein Apparat (100) zur Kontrolle der Qualität einer Vielzahl dekorierter Behälter (1), die geeignet sind, von einem Förderband (10) entlang einer Transferrichtung (X) transportiert zu werden, und mindestens einen rohrförmigen Abschnitt (3) umfassen, der einen im Wesentlichen kreisförmigen Querschnitt in Bezug auf eine Bezugsachse (Y) quer zur Transferrichtung (X) aufweist, wobei der Apparat (100) mindestens umfasst:
- ein Handhabungsgerät (30), das so konfiguriert ist, dass es mit der Außenfläche mindestens eines ersten Behälters (1a) der Vielzahl von dekorierten Behältern (1) in Kontakt kommt und den ersten Behälter (1a) veranlasst, sich für ein vorbestimmtes Zeitintervall um die Bezugsachse (Y) zu drehen, während der erste Behälter (1a) direkt auf ihm bleibt und weiterhin von dem Förderband (10) entlang der Transferrichtung (X) transportiert wird, wobei das Handhabungsgerät (30) mindestens eine Kontaktvorrichtung (32) enthält, die entlang des Förderbands (10) installiert ist und sich um eine im Wesentlichen parallel zu seiner Bezugsachse (Y) verlaufende Drehachse (Y1) dreht und in einer Position befindet, die sich dazu eignet, in Kontakt mit der Außenfläche des genannten mindestens ersten Behälters (1a) zu kommen, während der erste Behälter (1a) vom Förderband (10) entlang der Transferrichtung (X) transportiert wird, die mindestens eine Kontaktvorrichtung (32), mindestens ein erstes Antriebsband (32) und ein zweites Antriebsband (36) umfasst, die entlang des Förderbandes (10) im Wesentlichen parallel und einander zugewandt installiert sind, wobei die mehreren Behälter (1) zwischen ihnen hindurchlaufen, wobei das erste Antriebsband (32) so angeordnet ist, dass es eine erste Außenfläche des ersten Behälters (1a) mit einer ersten tangentialen Geschwindigkeit (V_{T1}) berührt, und das zweite Antriebsband (36) so angeordnet ist, dass es im Wesentlichen zur gleichen Zeit eine zweite Außenfläche des ersten Behälters (1a) gegenüber der ersten Außenfläche mit einer zweiten Tangentialgeschwindigkeit (V_{T2}) berührt, und wobei die erste und die zweite Tangentialgeschwindigkeit (V_{T1}, V_{T2}) entlang der Transferrichtung (X) sowohl in der Vorschubrichtung des Förderbandes (10) oder in einer der Vorschubrichtungen und der anderen in der entgegengesetzten Richtung gerichtet sind und voneinander abweichende Werte haben;
- ein Inspektionssystem (50) das so konfiguriert ist, dass es mindestens eines oder mehrere Bilder mindestens eines Abschnitts des ersten Behälters (1a) erfasst, während der erste Behälter (1a) auf dem Förderband (10) rotiert, wobei das Inspektionssystem (50) weiterhin so konfiguriert ist, dass es eines oder mehrere erfasste Bilder ausarbeitet und die Qualität des ersten Behälters (1a) oder eines Teils davon prüft, indem es das eine oder die mehreren ausgearbeiteten Bilder mit mindestens einem Referenzbild vergleicht, das ein qualitativ akzeptables Modell für den ersten Behälter (1a) oder eines Teils davon darstellt;
wobei der Apparat (100) **dadurch gekennzeichnet ist, dass** die mindestens eine Kontaktvorrichtung des Handhabungsgeräts (30) weiterhin umfasst:
- ein drittes Antriebsband (40) und ein viertes Antriebsband (45), die entlang des Förderbandes (10) im Wesentlichen parallel und einander zugewandt installiert sind, wobei die Mehrzahl von Behältern (1) zwischen ihnen hindurchläuft, wobei das dritte Antriebsband (40) so angeordnet ist, dass es mit einer dritten Tangentialgeschwindigkeit (V_{T3}) eine dritte Außenfläche des ersten Behälters (1a) berührt, und das vierte Antriebsband (45) so angeordnet ist, dass es eine vierte Außenfläche des ersten Behälters (1a) berührt, im Wesentlichen gegenüber der dritten Oberfläche, mit einer vierten Tangentialgeschwindigkeit (V_{T4}), und wobei die dritte und die vierte Tangentialgeschwindigkeit (V_{T3}, V_{T4}) entlang der Transferrichtung (X) sowohl in der Vorschubrichtung des Förderbandes (10) als auch in der Vorschubrichtung und in der entgegengesetzten Richtung gerichtet sind und unterschiedliche Werte haben; und dass jedes der ersten, zweiten, dritten und vierten Antriebsbänder (32, 36, 40, 45) in einer einstellbaren Position relativ zu dem Förderband (10) installiert ist, wobei
- das erste Antriebsband (32) um eine erste Umlenkrolle (33) und eine zweite Umlenkrolle herum angebracht ist, wobei die erste Umlenkrolle (32) entlang einer ersten Drehwelle (20), die von einem ersten Motor (21) angetrieben wird, und die zweite Umlenkrolle, die drehbar um eine erste Stützwelle (22) herum angebracht ist, montiert und fest beweglich ist, wobei die erste Umlenkrolle (33) und die zweite Umlenkrolle um die jeweilige erste und zweite Drehachse (Y1, Y2) im Wesentlichen parallel zueinander und zur Bezugsachse (Y) rotieren, wobei das erste Antriebsband (32) um sie herum gewickelt ist und während der Rotation die zweite Umlenkrolle in Drehung versetzt;
- das zweite Antriebsband (36) um eine dritte Umlenkrolle (37), eine vierte Umlenkrolle, eine fünfte Umlenkrolle (38) und eine sechste Umlenkrolle (39) herum angebracht ist, wobei die dritte Umlenkrolle (37) entlang einer zweiten Drehwelle (23), die von einem zweiten Motor (24) angetrieben wird, angebracht und fest mit dieser beweglich ist, die vierte Umlenkrolle drehbar um eine zweite Stützwelle (25) herum angebracht ist, die fünfte Umlenkrolle (38) drehbar um eine dritte Stützwelle (26) herum angebracht ist, und die sechste Umlenkrolle (39) drehbar um eine vierte Stützwelle (27), die dritte, vierte, fünfte und sechste Umlenkrolle sich jeweils um eine dritte, vierte, fünfte und sechste Drehachse (Y3, Y4, Y5 Y6) drehen, die im wesentlichen parallel zueinander und zu der Bezugsachse (Y) angeordnet sind, wobei das zweite Antriebsband (36) um sie herum gewickelt ist und während der Rotation die vierte Umlenkrolle und die fünfte und sechste Umlenkrolle (38, 39) in Drehung versetzt;
- das dritte Antriebsband (40) um eine siebte Umlenkrolle (41) und eine achte Umlenkrolle (42) herum montiert ist, wobei die siebte Umlenkrolle (41), im Wesentlichen ausgerichtet mit der ersten Umlenkrolle (33), entlang und fest drehend mit der ersten Drehwelle (20), die von dem ersten Motor (21) betätigt wird, um die erste Drehachse (Y1) herum montiert ist, wobei die achte Umlenkrolle (42), im Wesentlichen ausgerichtet mit der zweiten Umlenkrolle, entlang der ersten Stützwelle (22) montiert ist und sich um die zweite Drehachse (Y2) dreht;
- das vierte Antriebsband (45) um eine neunte Umlenkrolle (46), eine zehnte Umlenkrolle (47), eine elfte Umlenkrolle (48) und eine zwölfte Umlenkrolle (49) herum montiert ist, wobei die neunte Umlenkrolle (46) montiert ist, ausgerichtet mit der dritten Umlenkrolle (36), entlang und fest drehend mit der zweiten Drehwelle (23), die von dem zweiten Motor (24) um die dritte Drehachse (Y3) angetrieben wird, wobei die zehnte Umlenkrolle (47) entlang der zweiten Stützwelle (25) montiert ist, ausgerichtet mit der vierten Umlenkrolle, und sich um die vierte Drehachse (Y4) dreht, wobei die elfte Umlenkrolle (48) entlang der dritten Stützwelle (26) montiert ist, ausgerichtet mit der fünften Umlenkrolle (38), und sich um die fünfte Drehachse (Y5) dreht, wobei die zwölfte Umlenkrolle (49) entlang der vierten Stützwelle (27) montiert ist, ausgerichtet mit der sechsten Umlenkrolle (39), und sich um die sechste Drehachse (Y6) dreht, wobei das vierte Antriebsband (36) um sie herum gewickelt ist und während der Rotation die zehnte, elfte und zwölfte Umlenkrolle und die fünfte und sechste Umlenkrolle (47, 48, 49) in Drehung versetzt; und wobei das Handhabungsgerät (30) weiterhin Folgendes umfasst:
- zwei Kreuzglieder (34), die die erste Drehwelle (20) und die erste Stützwelle (22) strukturell miteinander verbinden, wodurch eine erste Unterbaugruppe des Handhabungsgeräts (30) gebildet wird, die als erste Stand-alone-Vorrichtung beweglich und platzierbar ist, und
- weiter vier Kreuzglieder (35) von denen zwei Kreuzglieder (35) die zweite Drehwelle (23) und die dritte Stützwelle (26) strukturell miteinander verbinden, und die anderen beiden Kreuzglieder (35) die zweite und vierte Stützwelle (25, 27) miteinander verbinden, wodurch eine zweite Unterbaugruppe des Handhabungsgeräts (30) gebildet wird, die als zweite Stand-alone-Vorrichtung beweglich und platzierbar ist.

2. Der Apparat (100) gemäß Anspruch 1, wobei das Handhabungsgerät (30) so konfiguriert ist, dass es den ersten Behälter (1a) veranlasst, sich um mindestens eine volle Umdrehung um die Bezugsachse (Y) zu drehen, während der erste Behälter (1a) vom Förderband (10) entlang der Transferrichtung (X) um einen vorbestimmten Abstand verschoben wird, der im Wesentlichen gleich dem Durchmesser (D) seines im Wesentlichen kreisförmigen Querschnitts oder im Wesentlichen gleich der Summe aus dem Durchmesser (D) seines im Wesentlichen kreisförmigen Querschnitts plus dem Abstand des ersten Behälters (1a) vom nachfolgenden Behälter (1), gemessen entlang der Richtung (X), ist.

3. Der Apparat (100) nach einem oder mehreren der vorhergehenden Ansprüche, wobei sein Inspektionssystem (50) weiterhin mindestens einen Illuminator (54) umfasst, der so konfiguriert ist, dass er mindestens einen Teil des ersten Behälters (1a) beleuchtet, während der erste Behälter (1a) auf dem Förderband (10) rotiert, wobei der mindestens eine Illuminator (54) innerhalb eines Raums (60) installiert ist, der von dem ersten Antriebsband (32) oder dem zweiten Antriebsband (36) umrundet wird.

4. Der Apparat (100) nach einem oder mehreren der vorhergehenden Ansprüche, wobei sein Inspektionssystem (50) mindestens eine mit einem Linearsensor ausgestattete Videokamera (52) umfasst, die zumindest für einen Teil der Länge des Förderbandes (10) beweglich angeordnet ist, und zwar hin und her entlang einer Bewegungsachse (XC), die im Wesentlichen parallel zu seiner Transferrichtung (X) verläuft.

5. Der Apparat (100) nach einem oder mehreren der Ansprüche 1 bis 4, wobei sein Inspektionssystem (50) mindestens eine mit einem Matrixsensor ausgestattete Hochgeschwindigkeits-Videokamera (52) umfasst, die in einer festen Position entlang des Förderbands (10) installiert und so konfiguriert ist, dass sie sequenzweise verschiedene interessante Bereiche des Sensors auswählt, um eines oder mehrere Bilder des ersten Behälters (1a) oder eines Teils davon zu erfassen, während der erste Behälter (1a) auf dem Förderband (10) rotiert.

6. Der Apparat (100) nach Anspruch 5 oder 6, wobei sein Inspektionssystem (50) eine elektronische Bearbeitungseinheit (56) umfasst, die dazu konfiguriert ist, eines oder mehrere von der mindestens einen Videokamera (52) erfassten Bilder auszuarbeiten und die Qualität des ersten Behälters (1a) oder eines Teils davon zu prüfen, indem es das eine oder die mehreren ausgearbeiteten Bilder mit mindestens einem Referenzbild vergleicht.

7. Eine Produktionslinie zur Herstellung oder Befüllung von dekorierten Behältern (1), die mindestens einen rohrförmigen Abschnitt (3) mit einem in Bezug auf eine Bezugsachse (Y) im Wesentlichen kreisförmigen Querschnitt umfassen, wobei die Produktionslinie **dadurch gekennzeichnet ist, dass** sie mindestens umfasst:
- ein Förderband (10), das so beschaffen ist, dass es eine Vielzahl der genannten dekorierten Behälter (1) unter Produktion entlang einer Transferrichtung (X) quer zur Bezugsachse (Y) verschiebt; und
- einen Apparat (100) zur Kontrolle der Qualität der genannten Mehrzahl von dekorierten Behältern (1) gemäß einem oder mehreren der vorhergehenden Ansprüche.

## Revendications

1. Appareil (100) pour contrôler la qualité d'une pluralité de récipients décorés (1) qui sont aptes à être déplacés par une bande transporteuse (10) le long d'une direction de transfert (X) et comprenant au moins une partie tubulaire (3) ayant une section transversale sensiblement circulaire par rapport à un axe de référence (Y) transversal à la direction de transfert (X), l'appareil (100) comprenant au moins :
- un appareil de manipulation (30) configuré pour entrer en contact avec la surface externe d'au moins un premier récipient (1a) de ladite pluralité de récipients décorés (1) et faire tourner le premier récipient (1a) pendant un intervalle de temps prédéterminé autour de l'axe de référence (Y), tandis que le premier récipient (1a) repose directement sur la bande transporteuse (10) et continue d'être déplacé par celle-ci le long de la direction de transfert (X), dans lequel l'appareil de manipulation (30) comprend au moins un dispositif de contact (32) qui est installé le long de la bande transporteuse (10), tournant autour d'un axe de rotation (Y1) sensiblement parallèle audit axe de référence (Y) et dans une position adaptée pour entrer en contact avec la surface externe dudit au moins le premier récipient (1a) pendant que le premier récipient (1a) est déplacé par la bande transporteuse (10) le long de la direction de transfert (X), l'au moins un dispositif de contact (32) comprenant au moins une première courroie d'entraînement (32) et une deuxième courroie d'entraînement (36) qui sont installées le long de la bande transporteuse (10) de manière sensiblement parallèle et en face l'une de l'autre avec la pluralité de récipients (1) passant entre elles, dans lequel la première courroie d'entraînement (32) est agencée pour entrer en contact avec une première surface externe du premier récipient (1a) à une première vitesse tangentielle (V_{T1}) et la deuxième courroie d'entraînement (36) est agencée pour entrer en contact, sensiblement au même moment, avec une deuxième surface externe du premier récipient (1a) opposée à la première surface externe, à une deuxième vitesse tangentielle (V_{T2}), et dans lequel lesdites première et deuxième vitesses tangentielles (V_{T1}, V_{T2}) sont dirigées le long de la direction de transfert (X) à la fois dans la direction d'avancement de la bande transporteuse (10) ou l'une dans ladite direction d'avancement et l'autre dans la direction opposée et ont des valeurs différentes l'une de l'autre ;
- un système d'inspection (50) configuré pour capturer une ou plusieurs images d'au moins une partie du premier récipient (1a) pendant que le premier récipient (1a) est en rototranslation sur le convoyeur (10), dans lequel le système d'inspection (50) est en outre configuré pour élaborer les une ou plusieurs images capturées et pour contrôler la qualité du premier récipient (1a) ou d'une partie de celui-ci en comparant les une ou plusieurs images élaborées à au moins une image de référence représentant un modèle de qualité acceptable pour le premier récipient (1a) ou pour une partie de celui-ci ;
l'appareil (100) étant **caractérisé en ce que** l'au moins un dispositif de contact de l'appareil de manipulation (30) comprend en outre :
- une troisième courroie d'entraînement (40) et une quatrième courroie d'entraînement (45) qui sont installées le long de la bande transporteuse (10) de manière sensiblement parallèle et en face l'une de l'autre avec la pluralité de récipients (1) passant entre elles, dans lequel la troisième courroie d'entraînement (40) est agencée pour entrer en contact avec une troisième surface externe du premier récipient (1a) à une troisième vitesse tangentielle (V_{T3}) et la quatrième courroie d'entraînement (45) est agencée pour entrer en contact avec une quatrième surface externe du premier récipient (1a), sensiblement opposée à la troisième surface, à une quatrième vitesse tangentielle (V_{T4}), et dans lequel lesdites troisième et quatrième vitesses tangentielles (V_{T3}, V_{T4}) sont dirigées le long de la direction de transfert (X) à la fois dans la direction d'avancement de la bande transporteuse (10) ou l'une dans ladite direction d'avancement et l'autre dans la direction opposée et ont des valeurs différentes l'une de l'autre ; et **en ce que** chacune desdites première, deuxième, troisième et quatrième courroies d'entraînement (32, 36, 40, 45) est installée dans une position réglable par rapport à la bande transporteuse (10), dans lequel
- la première courroie d'entraînement (32) est montée autour d'une première poulie (33) et d'une deuxième poulie, la première poulie (32) étant montée le long d'un premier arbre rotatif (20) actionné par un premier moteur (21) et se déplaçant solidairement avec lui, et la deuxième poulie étant montée en rotation autour d'un premier arbre-support (22), la première poulie (33) et la deuxième poulie tournant autour d'un premier et d'un deuxième axe de rotation (Y1, Y2) respectifs sensiblement parallèles l'un à l'autre et à l'axe de référence (Y), la première courroie d'entraînement (32) étant enroulée autour d'elles et entraînant en rotation, tout en tournant, la deuxième poulie ;
- la deuxième courroie d'entraînement (36) est montée autour d'une troisième poulie (37), d'une quatrième poulie, d'une cinquième poulie (38) et d'une sixième poulie (39), la troisième poulie (37) étant montée le long d'un deuxième arbre rotatif (23) actionné par un deuxième moteur (24) et se déplaçant solidairement avec lui, la quatrième poulie étant montée en rotation autour d'un deuxième arbre-support (25), la cinquième poulie (38) étant montée en rotation autour d'un troisième arbre-support (26), et la sixième poulie (39) étant montée en rotation autour d'un quatrième arbre-support (27), les troisième, quatrième, cinquième et sixième poulies tournant chacune autour d'un troisième, quatrième, cinquième et sixième axe de rotation (Y3, Y4, Y5 Y6) respectifs sensiblement parallèles les uns aux autres et à l'axe de référence (Y), la deuxième courroie d'entraînement (36) étant enroulée autour d'elles et entraînant en rotation, tout en tournant, la quatrième poulie et les cinquième et sixième poulies (38, 39) ;
- la troisième courroie d'entraînement (40) est montée autour d'une septième poulie (41) et d'une huitième poulie (42), la septième poulie (41) étant montée, sensiblement alignée avec la première poulie (33), le long du premier arbre rotatif (20) actionné par ledit premier moteur (21) et se déplaçant solidairement avec lui, autour du premier axe de rotation (Y1), la huitième poulie (42) étant montée, sensiblement alignée avec la deuxième poulie, le long du premier arbre-support (22) et tournant autour du deuxième axe de rotation (Y2) ;
- la quatrième courroie d'entraînement (45) est montée autour d'une neuvième poulie (46), d'une dixième poulie (47), d'une onzième poulie (48) et d'une douzième poulie (49), la neuvième poulie (46) étant montée, alignée avec la troisième poulie (36), le long du deuxième arbre rotatif (23) actionné par ledit deuxième moteur (24) et tournant solidement avec lui autour du troisième axe de rotation (Y3), la dixième poulie (47) étant montée le long du deuxième arbre-support (25), alignée avec la quatrième poulie, et tournant autour du quatrième axe de rotation (Y4), la onzième poulie (48) est montée le long du troisième arbre-support (26), alignée avec la cinquième poulie (38), tournant autour du cinquième axe de rotation (Y5), la douzième poulie (49) étant montée le long du quatrième arbre-support (27), alignée avec la sixième poulie (39), tournant autour du sixième axe de rotation (Y6), la quatrième courroie d'entraînement (36) étant enroulée autour d'elles et entraînant en rotation, tout en tournant, les dixième, onzième et douzième poulies (47, 48, 49) ; et dans lequel l'appareil de manipulation (30) comprend en outre :
- deux traverses (34) qui relient structurellement le premier arbre rotatif (20) et le premier arbre-support (22), formant ainsi un premier sous-ensemble de l'appareil de manipulation (30) mobile et déplaçable en tant qu'un premier dispositif autonome, et
- quatre autres traverses (35) dont deux traverses (35) relient structurellement le deuxième arbre rotatif (23) et le troisième arbre-support (26), et les deux autres traverses (35) relient les deuxième et quatrième arbres-support (25, 27), formant ainsi un second sous-ensemble de l'appareil de manipulation (30) mobile et déplaçable en tant qu'un second dispositif autonome.

2. Appareil (100) selon la revendication 1, dans lequel l'appareil de manipulation (30) est configuré pour faire tourner le premier récipient (1a) d'au moins un tour complet autour de l'axe de référence (Y), tandis que le premier récipient (1a) est déplacé par la bande transporteuse (10) le long de la direction de transfert (X) d'une distance prédéterminée sensiblement égale au diamètre (D) de sa section transversale sensiblement circulaire ou sensiblement égale à la somme du diamètre (D) de sa section transversale sensiblement circulaire et de la distance du premier récipient (1a) par rapport au récipient suivant (1), mesurée le long de la direction (X).

3. Appareil (100) selon une ou plusieurs des revendications précédentes, dans lequel ledit système d'inspection (50) comprend en outre au moins un illuminateur (54) configuré pour éclairer au moins une partie du premier récipient (1a) pendant que le premier récipient (1a) est en rototranslation sur la bande transporteuse (10), ledit au moins un illuminateur (54) étant installé dans un espace (60) entouré par ladite première courroie d'entraînement (32) ou par ladite deuxième courroie d'entraînement (36).

4. Appareil (100) selon une ou plusieurs des revendications précédentes, dans lequel ledit système d'inspection (50) comprend en outre au moins une caméra vidéo (52), équipée d'un capteur linéaire, qui est agencée de manière mobile, au moins sur une partie de la longueur de la bande transporteuse (10), selon un mouvement de va- et-vient le long d'un axe de mouvement (XC) sensiblement parallèle à ladite direction de transfert (X).

5. Appareil (100) selon une ou plusieurs des revendications 1 à 4, dans lequel le système d'inspection (50) comprend en outre au moins une caméra vidéo à grande vitesse (52), équipée d'un capteur matriciel, qui est installée dans une position fixe le long de la bande transporteuse (10) et est configurée pour sélectionner successivement différentes régions d'intérêt du capteur afin d'acquérir une ou plusieurs images du premier récipient (1a) ou d'une partie de celui-ci pendant que le premier récipient (1a) est en rototranslation sur la bande transporteuse (10).

6. Appareil (100) selon la revendication 5 ou 6, dans lequel le système d'inspection (50) comprend en outre une unité de traitement électronique (56) qui est configurée pour élaborer les une ou plusieurs images capturées par l'au moins une caméra vidéo (52) et pour contrôler la qualité du premier récipient (1a) ou d'une partie de celui-ci en comparant les une ou plusieurs images élaborées à l'au moins une image de référence.

7. Ligne de production pour la production ou le remplissage de récipients décorés (1) qui comprennent au moins une partie tubulaire (3) ayant une section transversale sensiblement circulaire par rapport à un axe de référence (Y), la ligne de production étant **caractérisée en ce qu'**elle comprend au moins :
- une bande transporteuse (10) qui est adaptée pour déplacer une pluralité desdits récipients décorés (1) en cours de production le long d'une direction de transfert (X) transversale par rapport à l'axe de référence (Y) ; et
- un appareil (100) pour contrôler la qualité de ladite pluralité de récipients décorés (1) selon une ou plusieurs des revendications précédentes.
